# EUROPÄISCHE PATENTANMELDUNG

(11) **EP 0 845 730 A1**
(43) Veröffentlichungstag der Anmeldung: **03.06.1998**
(21) Anmeldenummer: 97120076.1
(22) Anmeldetag: 17.11.1997
(51) Int. Cl.: G05D 23/19

(54) **Vorrichtung zur Heizungsregelung**

(30) Priorität: 27.11.1996 DE 19649157
(71) Anmelder: ROBERT BOSCH GMBH, 70442 Stuttgart (DE)
(72) Erfinder: Nothdurft, Gerhard, 73230 Kirchheim (DE); Koenig, Markus, 73033 Göppingen (DE); Peters, Sandra, 70794 Filderstadt (DE)

(57) **Zusammenfassung**

Es wird eine Vorrichtung zur Heizungsregelung vorgeschlagen, mit einem Brenner, der ein Heizmedium aufheizt, wobei sich ein zeitlicher Verlauf einer Ist-Temperatur (10) ergibt, der von der Heizleistung, dem thermischen Verhalten der Anlage und des zu heizenden Gebäudes abhängt. Ein Regler (13) betätigt den Brenner über einen Schalter (16). Ein Schaltzeitpunkt (15) hängt von einem Maß für eine Fläche (12) ab, die von dem zeitlichen Verlauf der Ist-Temperatur (10) beeinflußt ist.

## Beschreibung

### Stand der Technik

Die Erfindung geht aus von einer Vorrichtung zur Heizungsregelung nach der Gattung des Hauptanspruchs. Bei den bekannten Vorrichtungen dieser Gattung erfolgt die Regelung innerhalb einer Heizungsanlage in Abhängigkeit von den gerade vorliegenden Betriebsdaten entweder durch einen Stetigregler oder durch einen Zweipunkt-Regler. Unterhalb einer Mindestleistung, die beispielsweise bei 40% der Nennleistung liegt, ist nur taktender Betrieb mit dem Zweipunktregler möglich. Mehrere Zweipunkt-Regelverfahren versuchen, einen Kompromiß zwischen einer gewünschten langen Brennerlaufzeit, geringen Temperaturschwankungen und ausreichender Heizleistung zu finden. Zweipunktregler mit fester Hysterese können nicht auf variables Temperaturverhalten des Gesamtsystems reagieren. Dies kann zu hohen Taktfrequenzen führen, wobei Wirkungsgrad und Verbrennung ungünstig sind. Diesem Nachteil versuchen Zweipunkt-Regler mit einer automatischen Anpassung der Hysterese zu begegnen. Dem verbesserten Taktverhalten stehen lange Anpassungszeiten des Zweipunkt-Reglers gegenüber. Eine weitere Regelungsmöglichkeit besteht in der Vorgabe einer festen Periodendauer, innerhalb derer das Tastverhältnis angepaßt werden kann. Hier können Betriebsfälle auftreten, in denen eine zu geringe Heizleistung bereitgestellt wird. Ein weiteres Regelungskonzept sieht vor, hohe Taktfrequenzen durch Einführung einer generellen Sperrzeit, die das Wiedereinschalten innerhalb einer bestimmten Zeit verhindert, zu reduzieren. Diese Sperrzeit führt durch die Abkühlung zu großen Temperaturschwankungen. Bei langen, Sperrzeiten ist hier ebenfalls nicht sichergestellt, daß ausreichend Heizleistung zur Verfügung gestellt wird. Eine kurze Sperrzeit verhindert häufiges Takten nicht.

Der Erfindung liegt die Aufgabe zugrunde, eine Vorrichtung bereitzustellen, die ein verbessertes Regelverhalten aufweist. Die Aufgabe wird durch die im Hauptanspruch angegebenen Merkmale gelöst.

### Vorteile der Erfindung

Die erfindungsgemäße Vorrichtung zur Heizungsregelung zeichnet sich dadurch aus, daß die Schaltzeitpunkte eines Schalters von einem Maß für eine Fläche abhängen, die vom zeitlichen Verlauf der Ist-Temperatur beeinflußt ist. Da die Schaltzeitpunkte vom Verlauf der Ist-Temperatur abhängen, ist die erfindungsgemäße Vorrichtung unabhängig vom jeweiligen Anlagenaufbau. Auf verändertes Temperaturverhalten kann rasch innerhalb der aktuellen Takt-Periode reagiert werden. Die Verwendung der Fläche zur Bestimmung der Schaltzeitpunkte ermöglicht es, zeitlich zurückliegende Werte der Soll-Temperatur für das aktuelle Schaltverhalten zu berücksichtigen. Zu häufiges Takten kann vermieden werden, da aktuelle Schwankungen immer in Bezug auf die Vergangenheit gewertet werden. Die erfindungsgemäße Vorrichtung stellt sicher, daß ausreichend Heizleistung abgegeben wird. Denn das Überschreiten einer aktuellen Soll-Temperatur führt nur dann zum Abschalten des Brenners, wenn auch in der Vergangenheit genügend Heizleistung zur Verfügung stand. So stellt sich im Mittel die gewünschte Soll-Temperatur ein.

In einer zweckmäßigen Weiterbildung ist vorgesehen, daß die Fläche durch den zeitlichen Verlauf der Ist-Temperatur begrenzt ist. Die Fläche ist damit ein Maß der aktuellen mittleren Temperatur. Starke Schwankungen der Ist-Temperatur führen nicht sofort zu einer Auslösung eines Schaltvorganges. Dadurch läßt sich die Taktfrequenz erniedrigen.

In einer zweckmäßigen Ausgestaltung ist vorgesehen, daß die Fläche durch den zeitlichen Verlauf der Differenz von Isttemperatur und Soll-Temperatur begrenzt ist. Die Fläche repräsentiert die mittlere Regelabweichung. Die Schaltzeitpunkte lassen sich insofern leicht bestimmen, als bei einem Nulldurchgang der mittleren Regelabweichung der Brenner zugeschaltet wird, um den Trend umzukehren.

Eine zweckmäßige Weiterbildung sieht vor, daß als Maß für die Fläche ein Mittelwert des zeitlichen Verlaufs der Ist-Temperatur dient. Der Mittelwert als Regelgröße entspricht dem Verhalten des Taktbetriebs am ehesten, da sich im Taktbetrieb keine stationäre Ist-Temperatur einstellen wird.

In vorteilhaften Weiterbildungen wird das Maß für die Fläche zum einen durch Integration eines kontinuierlichen Verlaufs der Ist-Temperatur, zum anderen durch Summation diskreter Werte des kontinuierlichen Verlaufs der Ist-Temperatur gebildet. Die analoge Realisierung erlaubt eine einfache und rasche Flächenbestimmung. Eine diskrete Implementierung läßt flexible Gestaltungsmöglichkeiten zu, die dazu genutzt werden können, das Regelverhalten zu optimieren. Dies kann insbesondere durch eine unterschiedliche Gewichtung der Vergangenheitswerte erreicht werden.

Weitere zweckmäßige Weiterbildungen gemäß weiteren abhängigen Ansprüchen ergeben sich aus der Beschreibung.

### Zeichnung

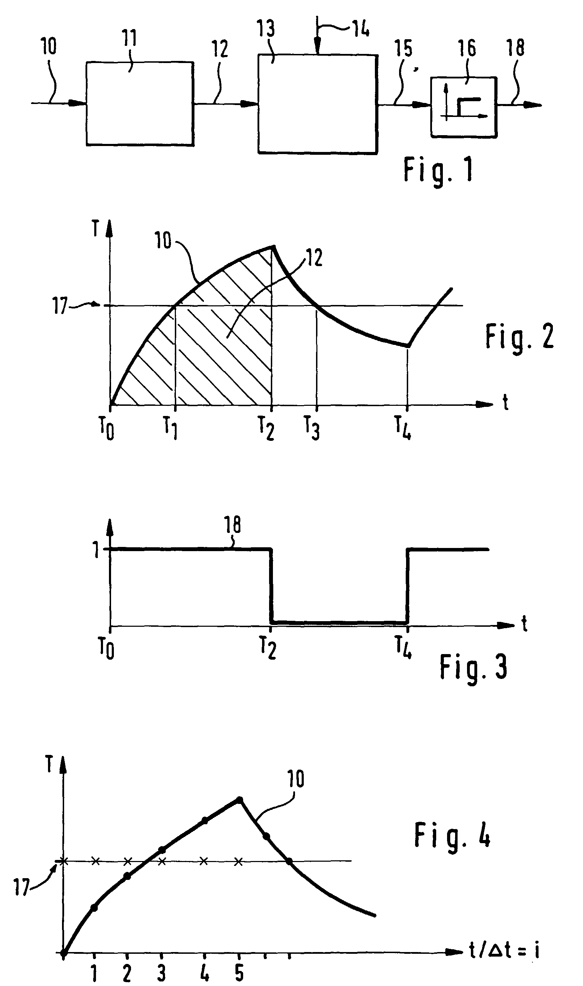

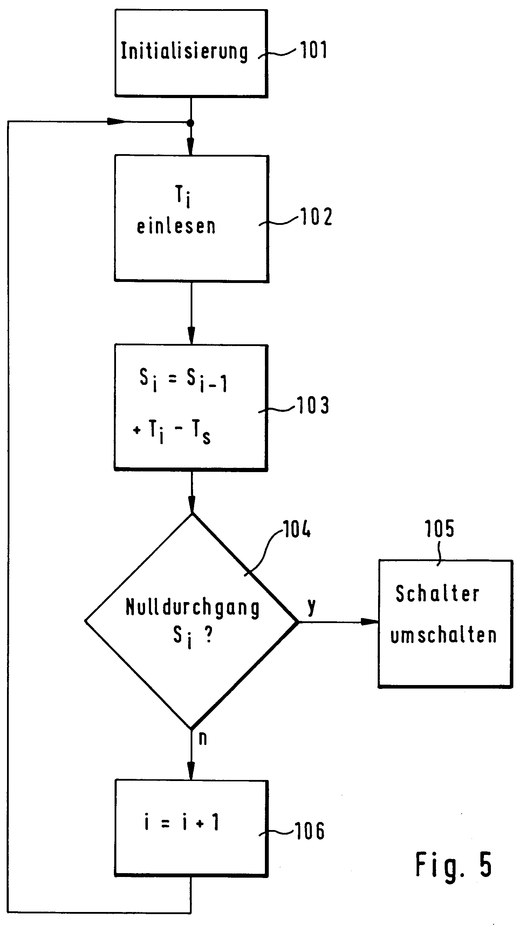

Figur 1 zeigt ein Blockschaltbild eines Ausführungsbeispiels der erfindungsgemäßen Vorrichtung. Figur 2 läßt sich ein möglicher Verlauf der Ist-Temperatur mit zugehöriger Soll-Temperatur entnehmen, in Figur 3 findet sich der zeitliche Verlauf des Schalterausgangs, der sich bei der Situation gemäß Figur 2 einstellt. Die Werte der Ist-Temperatur werden in Figur 4 zeitlich diskret erfaßt. In Figur 5 beschreibt ein Flußdiagramm eine Realisierungsmöglichkeit, wie sich die Schaltzeitpunkte festlegen lassen.

### Beschreibung der Ausführungsbeispiele

Ein zeitlicher Verlauf einer Ist-Temperatur 10 wird einer Flächenbestimmung 11 zugeführt, die daraus eine Fläche 12 ermittelt. Diese Fläche 12 ist neben einem Grenzwert 14 eine Eingangsgröße für einen Regler 13, der einem Schalter 16 einen Schaltzeitpunkt 15 bereitstellt. Ein Schalterausgang 18 ist die Ausgangsgröße des Schalters 16. Der zeitliche Verlauf der Ist-Temperatur 10 gemäß Figur 2 weist eine sägezahnförmige Charakteristik auf. Eine Soll-Temperatur 17 besitzt einen zeitlich gleichbleibenden Wert. Der zeitliche Verlauf des Schalterausgangs 18 besitzt eine binäre Charakteristik, der zum Zeitpunkt T₂ von 1 auf 0 wechselt. Zum Zeitpunkt T₄ tritt eine positive Flanke auf.

Ein Temperaturfühler erfaßt den zeitlichen Verlauf der Ist-Temperatur 10. Als Ist-Temperatur 10 dient beispielsweise die Temperatur des Heizmediums, insbesondere die Vorlauftemperatur. Die Erfassung der Ist-Temperatur 10 kann kontinuierlich erfolgen. Wird jedoch der Zeitverlauf der Ist-Temperatur 10 mit einem Abtastintervall von ΔT abgetastet, so verbleiben zeitlich diskrekte Werte gemäß Figur 4.

Eine Flächenbestimmung 11 erfaßt die Fläche 12, die durch den zeitlichen Verlauf der Ist-Temperatur 10 und der Zeitachse eingeschlossen wird.

Die schraffierte Fläche 12 gemäß Figur 2 ergibt sich durch Integration der Ist-Temperatur 10 vom Zeitpunkt T₀ bis zum Zeitpunkt T₂. Die Flächenbestimmung 11 kann auf Analogbasis durch einen als Integrierer verschalteten Operationsverstärker realisiert sein. Diese Fläche 12 vergleicht ein als Komparator ausgeführter Regler 13 mit dem Grenzwert 14. In dem Ausführungsbeispiel ist als Grenzwert 14 eine zweite Fläche gewählt, die die Soll-Temperatur bezüglich der Zeitachse bildet. Beginnend mit dem Zeitpunkt T₀ werden die Fläche 12 und die zweite Fläche ständig verglichen. Zum Zeitpunkt T₁ erreicht die Ist-Temperatur 10 die Soll-Temperatur 17. Der Schalter 16 wird jedoch nicht betätigt, da zum Zeitpunkt T₁ die zweite Fläche noch größer ist als die Fläche 12. Erst zum Zeitpunkt T₂ erreicht die Fläche 12 die Größe der zweiten Fläche. Wie der Figur 3 zu entnehmen, heizt der Brenner bis zum Zeitpunkt T₂. Erst dann wird er abgeschaltet. Zum Zeitpunkt T₂ erreicht die mittlere Temperatur der Ist-Tepmeratur 10, bezogen auf das Zeitintervall T₀ bis T₂, die Soll-Temperatur 17. Ab dem Zeitpunkt T₂ wiederholt sich der bereits beschriebene Vorgang. Die Fläche 12 ist nun ein Maß für die mittlere Temperatur, beginnend mit dem Zeitpunkt T₂. Zum Zeitpunkt T₄ stimmt die Fläche 12 mit der zweiten Fläche, wiederum im Intervall zwischen T₂ und T₄, überein. Der Schalterausgang 18 nimmt den Zustand 1 an.

Neben der beschriebenen getrennten Erfassung der Fläche 12 und der zweiten Fläche, bei deren Übereinstimmung der Schaltzeitpunkt 15 herbeigeführt wird, ist eine weitere Alternative denkbar. Es wird die Differenz gebildet zwischen der Ist-Temperatur 10 und der Soll-Temperatur 17. Dieser sich so ergebende zeitliche Kurvenverlauf schließt eine Fläche 12 ein, die als mittlere Regelabweichung interpretiert werden kann. Bei jedem Nulldurchgang wird der Zustand des Schalters 16 geändert. Die mittlere Regelabweichung konvergiert gegen Null.

Soll direkt der Mittelwert der Ist-Temperatur 10 dem Regler 13 zugeführt werden, so muß die Fläche 12 durch ein Zeitintervall dividiert werden, das durch die Integrationsgrenzen bestimmt ist. Dann kann der Mittelwert der Ist-Temperatur 10 direkt mit der Soll-Temperatur 17 verglichen werden, ohne die zweite Fläche zu benötigen.

Die Ist-Temperatur 10 kann auch diskret erfaßt werden. Der zeitliche Verlauf der Ist-Temperatur 10 wird nach jedem Abtastintervall erneut eingelesen. Dies kann beispielsweise über ein Sample-Hold-Glied oder einen A/D-Wandler realisiert sein. Die Abstastzeitpunkte sind ganzzahlige Vielfache der Abtastzeit ΔT und werden im folgenden mit dem Index i bezeichnet. Damit ergeben sich diskrete Werte Tᵢ der Ist-Temperatur 10. Für diskrete Werte vereinfacht sich die Flächenbestimmung 11. Die Fläche 12 ergibt sich näherungsweise durch Summation der diskreten Werte der Ist-Temperatur 10 von i = 0 bis n, wobei die Summe noch mit dem Abstastintervall ΔT multipliziert werden muß.

Gemäß Figur 5 wird der Schaltzeitpunkt 15 in Abhängigkeit von der Fläche 12 bestimmt, die sich aus der Differenz von Ist-Temperatur 10 und Soll-Temperatur 17 ergibt. Die Fläche 12 steht für die mittlere Regelabweichung, die diskret ermittelt wird. Bei der Initialisierung werden Index i sowie eine Summe Sᵢ auf Null zurückgesetzt, Schritt 101. Der diskrete Wert Tᵢ der Ist-Temperatur 10 wird eingelesen, Schritt 102. Die aktuelle Summe Sᵢ ergibt sich aus dem Wert der vorangegangenen Summe Sᵢ₋₁, zu der die Differenz von Ist-Temperatur Tᵢ und Soll-Temperatur 17 addiert wird, Schritt 103. Die vorangegangene Summe Sᵢ₋₁ wurde ebenfalls im Zuge der Initialisierung auf Null zurückgesetzt. Anschließend wird ermittelt, ob ein Nulldurchgang der Summe Sᵢ stattgefunden hat. Dies ist dann der Fall, wenn die Summe Sᵢ den Wert Null besitzt. Zumeist wird jedoch die Summe Sᵢ einen von Null verschiedenen Wert annehmen. Der Nulldurchgang läßt sich dann feststellen, indem die Vorzeichen der Summe Sᵢ und der vorangegangenen Summe Sᵢ₋₁ verglichen werden. Hat ein Vorzeichenwechsel stattgefunden, so läßt dies auf einen Nulldurchgang schließen. Werden die Vorzeichen der Summe Sᵢ und der vorangegangenen Summe Sᵢ₋₁ multipliziert, ist bei einem Ergebnis von -1 der Nulldurchgang erfolgt. Ist dies der Fall, wird der Schalter 10 umgeschaltet, Schritt 105. Falls nicht, so wird der Index i um 1 erhöht, Schritt 106. Der nächste diskrete Wert der Ist-Temperatur 10 Tᵢ wird eingelesen, Schritt 102. Dieser Programmablauf wiederholt sich entsprechend.

Zum Schutz des Brenners läßt sich als Grenzwert 14 eine maximale Übertemperaturfläche definieren, bei deren Erreichen der Schalter 16 den Brenner abschaltet. Die flächenbezogene Zweipunkt-Regelung eignet sich insbesondere in Kombination mit einem Stetigregler. Insbesondere wenn der Stetigregler abschalten würde, übernimmt die flächenbezogene Zweipunkt-Regelung die Kontrolle. Eine Koppelung mit einer maximal zulässigen Ist-Temperatur 10 oder einer maximalen Zeitvorgabe ist möglich.

## Patentansprüche

1. Vorrichtung zur Heizungsregelung, mit einem Brenner, der ein Heizmedium aufheizt, wobei sich ein zeitlicher Verlauf einer Ist-Temperatur (10) ergibt, der von der Heizleistung, dem thermischen Verhalten der Anlage und des zu heizenden Gebäudes abhängt, mit einem Regler (13), der den Brenner über einen Schalter (16) betätigt, dadurch gekennzeichnet, daß ein Schaltzeitpunkt (15) des Schalters (16) von einem Maß für eine Fläche (12), die von dem zeitlichen Verlauf der Ist-Temperatur (10) beeinflußt ist, abhängt.

2. Vorrichtung nach Anspruch 1, dadurch gekennzeichnet, daß die Fläche (12) durch den zeitlichen Verlauf der Ist-Temperatur (10) begrenzt ist.

3. Vorrichtung nach Anspruch 1, dadurch gekennzeichnet, daß die Fläche (12) durch den zeitlichen Verlauf der Differenz von Ist-Temperatur (10) und Soll-Temperatur (17) begrenzt ist.

4. Vorrichtung nach einem der vorhergehenden Ansprüche, dadurch gekennzeichnet, daß als Maß für die Fläche (12) ein Mittelwert des zeitlichen Verlaufs der Ist-Temperatur (10) dient.

5. Vorrichtung nach einem der vorhergehenden Ansprüche, dadurch gekennzeichnet, daß das Maß für die Fläche (12) durch Integration des zeitlichen Verlaufs der Ist-Temperatur (10) gebildet ist.

6. Vorrichtung nach einem der vorhergehenden Ansprüche 1 bis 4, dadurch gekennzeichnet, daß das Maß für die Fläche (12) durch Summation diskreter Werte des zeitlichen Verlaufs der Ist-Temperatur (10) zu bestimmten Zeitpunkten gebildet ist.

7. Vorrichtung nach einem der vorhergehenden Ansprüche, dadurch gekennzeichnet, daß das Maß für die Fläche (12) mit einem Grenzwert (14) verglichen ist.

8. Vorrichtung nach Anspruch 7, dadurch gekennzeichnet, daß der Grenzwert (14) von der Soll-Temperatur (17) abhängt.

9. Vorrichtung nach einem der vorhergehenden Ansprüche 7 oder 8, dadurch gekennzeichnet, daß der Grenzwert (14) von einem Maß für eine Fläche (12) abhängt, die durch den zeitlichen Verlauf der Soll-Temperatur (17) bestimmt ist.

10. Vorrichtung nach einem der Ansprüche 7 bis 9, dadurch gekennzeichnet, daß ein Betätigen des Schalters (16) zu den Schaltzeitpunkten (15) dann erfolgt, wenn das Maß für die Fläche (12) den Grenzwert (14) erreicht.

11. Vorrichtung nach einem der vorhergehenden Ansprüche, dadurch gekennzeichnet, daß ein Betätigen des Schalters (16) zu den Schaltzeitpunkten (15) dann erfolgt, wenn der Mittelwert die Soll-Temperatur (17) erreicht.
